(19) Europäisches Patentamt
European Patent Office
Office européen des brevets

(11) **EP 2 131 039 A1**

(12) **EUROPEAN PATENT APPLICATION**
published in accordance with Art. 153(4) EPC

(43) Date of publication:
**09.12.2009 Bulletin 2009/50**

(51) Int Cl.:
*F03G 6/06* (2006.01)

(21) Application number: **08718419.8**

(22) Date of filing: **15.01.2008**

(86) International application number:
**PCT/ES2008/000018**

(87) International publication number:
**WO 2008/104615 (04.09.2008 Gazette 2008/36)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **26.02.2007 ES 200700504**

(71) Applicants:
• **Garcia Ortiz, José Vicente**
  **46980 Paterna - Valencia (ES)**
• **Gonzalez Toledo, José Ignacio**
  **46980 Paterna - Valencia (ES)**

(72) Inventors:
• **Garcia Ortiz, José Vicente**
  **46980 Paterna - Valencia (ES)**
• **Gonzalez Toledo, José Ignacio**
  **46980 Paterna - Valencia (ES)**

(74) Representative: **ABG Patentes, S.L.**
  **Avenida de Burgos 16D**
  **Edificio Euromor**
  **28036 Madrid (ES)**

(54) **METHOD AND SYSTEM FOR CONVERTING SOLAR ENERGY INTO MECHANICAL OR ELECTRICAL ENERGY**

(57)    The invention relates to a system for converting solar energy into mechanical or electrical energy, comprising: means for concentrating the solar radiation from the sun at a given focal point, collector means for receiving and accumulating the solar radiation originating from the concentration means in order to accumulate thermal energy, and means for converting the thermal energy accumulated in the collector means into mechanical energy. Subsequently, the mechanical energy can be converted into electrical energy using a conventional generator.

**FIG. 2**

**Description**

**BACKGROUND OF THE INVENTION**

**Technical Field of the Invention**

The field of application of the invention is found within the industrial sector of energy generation from renewable sources, in general, and more specifically in thermoelectric energy, i.e., mechanical energy generation from solar energy in its thermal form by means of a thermodynamic process, and converting mechanical energy into electrical energy.

The main objective of the system and method of the invention is to cover the needs of small- and medium-scale thermoelectric energy production facilities, using small devices which concentrate the energy which is subsequently used in a thermodynamic cycle for this purpose.

**State of the Art**

The main energy source that exists on our planet is the sun, and many of the energy sources currently used are the result of the direct or indirect action of the sun.

The most direct ways of obtaining energy from the arrival of sunrays to the surface of the Earth are mainly two: photovoltaic solar energy and thermoelectric energy.

Photovoltaic solar energy uses the photovoltaic effect which is produced in semiconductor materials from the incidence of solar radiation on the photovoltaic cells, this effect being the most direct way of converting solar energy into electrical energy. The main advantage of facilities based on this type of energy is the possibility of having small power facilities. Two main drawbacks of this can be highlighted: the low efficiency of the transformation and the huge surface occupied if one wants to have average power.

On the other hand, in the framework of the other direct way of obtaining energy from solar radiation, thermoelectric energy, the existence of thermoelectric power plants which use the energy originating in the sun in the form of heat to transform it into electricity must be pointed out. The main drawback is that they are based on thermodynamic cycles such as the gas turbine or the steam turbine, which must have high outputs so that the machines have acceptable efficiencies. This implies a high cost of the facility as well as a large occupied surface, which is unsuitable for small facilities as they use thermal machines with very low performance.

Therefore, if one wants to use small-scale power facilities, it is unsuitable to use the conventional thermal machines and other types of machines and devices must be used.

More specifically, thermoelectric energy consists of generating electricity from the solar radiation gathered on the surface of the Earth in the form of thermal energy and its transformation into mechanical energy and subsequently into electrical energy. This process is carried out with power stations based on solar furnaces and those most recent in the so-called Stirling disc or parabolic collector plants.

Solar furnace: the solar furnace consists of a high tower where the rays originating from the solar reflection in mirrors *(heliostats)* are concentrated, said mirrors concentrating the energy in the tower. A water current is passed through, water which is converted into steam in order to subsequently convert the energy of the steam into mechanical energy and finally into electrical energy. These types of power plants based on steam turbines have high construction costs, but nevertheless, in contrast feature a high efficiency.

Solar tower: the solar tower is a new type of thermal solar power plant which bases its operation on the heating of air in a greenhouse with a large surface. The hot air is made to pass through turbines which are parallel to the ground and situated on a vertical tower that is many metres high. In the upper part, hot air exits which has lost a large part of the energy, transferring it to the turbines. These are power plants with high technical complexity since the turbines are elements with high mechanical precisions and of enormous size.

Stirling-Disc: there are various power plants assembled with this technology, one clear example being the Almeria power plant or PSA (Spain). It basically consists of a parabolic disc which, by means of reflection, concentrates the solar rays at a focal point whereon is installed an external combustion engine, such as for example a Stirling engine. This engine uses the thermal energy by means of the aforementioned thermodynamic process in mechanical energy and subsequently in electrical energy.

These types of power plants feature the drawback that the engine is placed in line with the sun and is therefore exposed to direct solar radiation as well as the solar radiation gathered on the parabolic disc. These two effects added together force the engine to have to withstand high temperatures which excessively heat up the oil temperature and, consequently, the properties are lost and the machine has to be stopped.

Another type of the power plants is the parabolic cylinder power plant. These types of power plants are based on a steam turbine and comprise parabolic cylinders which focalize the energy in a tube, through which a flow of water is passed. Said water receives and absorbs the solar energy until it is converted into water vapour, and finally the water vapour is passed through a turbine so that energy is recovered in mechanical form for its subsequent transformation into electrical energy.

This facility has the same drawback as the rest of the power plants based on steam turbines. This drawback is centralized on the fact that the facilities require a high output so that the efficiency of the turbine is suitable and consequently they occupy a large surface.

## DESCRIPTION OF THE INVENTION

According to the invention, a system is provided which resolves the problem of small- and medium-scale energy generation, overcoming the problem inherent to the currently existing systems, such as the high cost of the facilities, the need of a large solar energy collection surface and the low efficiency of the conventional thermal machines.

To do this, in a first aspect the invention presents a system for converting solar energy into mechanical energy, which is subsequently converted into electrical energy. This system comprises first means of concentrating the solar energy at a given focal point, second collector means with a greenhouse effect of the solar radiation originating from the first concentrating means, whose purpose is to accumulate the thermal energy and third means materialized in an external combustion engine, receptor of the thermal energy accumulated in the accumulating means for the production of mechanical energy.

Unlike the systems in the state of the art, the system of the invention presents as a first difference that the solar radiation is not reflected in mirrors but rather that it is concentrated on a converging lens with special characteristics.

In a second aspect, the invention provides a method of converting the solar energy into mechanical energy by means of the system of the invention. The method presents the following as main steps:

> i. concentration of solar radiation at a given focal point by means of concentration means,
> ii. accumulation of solar radiation originating from the concentration means in accumulating means, and
> iii. application or delivery of the thermal energy accumulated in the accumulating means to an external combustion engine.

These and other objectives of the invention are achieved by means of a system according to claim 1, and a method according to claim 15. The specific embodiments of the system object of the invention are respectively defined in dependent claims 2 to 14 and 16.

More specifically, the solar energy is focalized on a *Fresnel* lens, and at the focal length, i.e. a thermal energy collector is installed at the focal point for applying the thermal energy to a *Stirling* engine of dimensions and power suitable to recover said thermal energy in the form of mechanical energy.

The characteristics of *Fresnel* lenses compared to other types of lenses are the following:

- small size (thickness) compared to solid lenses,
- much lower production costs than solid lenses,
- greater focal amplitude than the converging Standard lenses, i.e. greater dispersion of the focal point, and
- lighter weight, as they use less material, which results in a greater mobility and control for control support systems.

Furthermore, the system will be complemented with a control system which, by using a temperature gauge or sensor, will cause the engine to start up when the suitable conditions are provided and an electric generator which will recover the mechanical energy of the engine in electricity.

The external combustion engine (Stirling type) has, on its hot spot, a receptor-accumulator provided with a black surface (by soaking of selective paint or any other form) with greenhouse effect characteristics which facilitates the accumulation of the thermal energy for its subsequent delivery to the referenced hot spot of the external combustion engine without almost any energetic losses.

The advantages which are derived from the system of the invention are, amongst others:

- the hot spot of the external combustion engine is located in the shady part of the lens, which implies a greater use of the solar surface,
- the cold spot of the external combustion engine is easier to protect from the harshness of the sun,
- the lens has a smaller mass and permits mobile masses which do the tracking to consume less energy,
- the facility can have as much power is it needs and given a size which increases the technical complexity of the facility, it can be substituted by as many lower power and technically more accessible modules as desired.

**EP 2 131 039 A1**

## DESCRIPTION OF THE FIGURES

These and other characteristics and advantages of the invention will be more clearly observed from the detailed description which follows, as a preferred embodiment, given solely as an illustrative and non-limitative example, with reference to the accompanying figures.

fig. 1   shows a general schematic representation of the system of the invention;

fig. 2   shows a close-up of the collecting means with greenhouse effect of the invention;

fig. 3   shows a plan and profile view of the concentrator means, *Fresnel* lens in the preferred embodiment of the invention;

fig. 4   shows a representation of the conversion means of thermal energy into mechanical energy of the invention, specifically of a *Stirling-cycle* external combustion engine according to the preferred embodiment of the invention.

fig. 5   shows a graphic representation of the reference points of the air cycle of the Stirling-cycle engine of the preferred embodiment of the invention.

fig. 6   shows a graphic representation of the evolution of the volume of each cylinder and of the total Stirling-cycle engine of the preferred embodiment of the invention.

fig. 7   shows a graphic representation of the evolution of pressure and temperature over the course of the thermodynamic cycle of the Stirling-cycle engine of the preferred embodiment of the invention.

## DETAILED DESCRIPTION OF A PREFERRED ENIBODIMENT OF THE INVENTION

As has been indicated above, the detailed description of the invention is going to be carried out taking into consideration the representations of the attached figures.

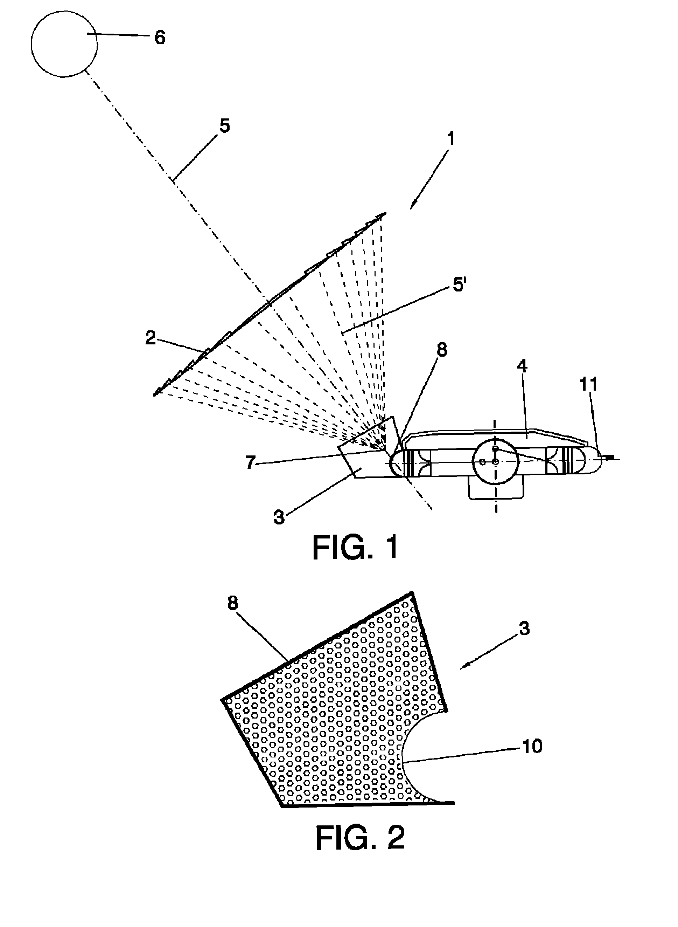

Therefore, in figure 1, it can be observed that the system (1) for converting thermal energy into mechanical energy of the invention comprises concentration means (2) of the radiation (5) originating from the sun (6) at a given focal point, collection means (3) with greenhouse effect, receptors and accumulators of the solar radiation (5') originating from the concentration means (2) for accumulating the thermal energy and conversion means (4) of the thermal energy into mechanical energy. Subsequently, the mechanical energy originating from the conversion means (4) can be converted into electrical energy by using means of converting mechanical energy into electrical energy (not represented).

In a specific embodiment, the concentration means (2) are a *"Fresnel"* type lens and the conversion means (4) of thermal energy into mechanical energy are materialized in an external combustion engine (of *Stirling* or *Eriksson* cycle) which receives the thermal energy accumulated in the referenced accumulating means (3) for the production of mechanical energy.

More specifically, it is observed in figure 1 how the rays (5) emitted by the sun (6) and which arrive to the surface of the Earth in an approximately perpendicular and parallel manner, fall on a *Fresnel* lens (2), which concentrates the solar rays (5') at a given focal point (7). The focal point generated by these types of lenses is not of a high quality, but high enough for this application. The rays (5') are focalized on a greenhouse effect solar collector (3) which accumulates the thermal energy and transfers it to the external combustion thermal engine (4) at its hot spot (8). Subsequently, the mechanical energy obtained from the external combustion thermal engine (4) can be converted into electrical energy by means of a conventional generator.

The solar collector (3) is provided with a radiation inlet area (9) made of a material which allows solar radiation (5') to pass through and prevents infrared radiation from exiting, thereby creating the desired greenhouse effect. The hot spot (8) of the Stirling engine is situated in an area (10) of the collector (3) opposite the radiation inlet area (9), so that the thermal energy contained in the collector (3) is easily transferred to the interior of the engine, thereby entering into the thermodynamic cycle.

In a specific embodiment, the radiation inlet (9) is essentially parallel to the horizontal plane of the concentration means (2).

In figure 2, the solar collector (3), the main characteristics whereof have been described in the previous paragraph, can be observed in close detail. As has been mentioned, the radiation inlet area (9) is made of a material which permits the passing of solar radiation and which, at the same time, is opaque to infrared radiation, so that it prevents the leakage of the radiation emitted by the inner components of the collector due to its temperature.

Likewise, the collector array (3) is leaktight and a gas with characteristics similar to the mirror is installed therein, i.e. greenhouse effect gas such as $CO_2$, gas which is transparent to solar radiation (5') and opaque to infrared radiation. The walls of the collector (3) are provided with a thermal insulating material to minimize leakages of the interior thermal energy in the form of heat, and the contact area (10) with the hot spot (8) of the external combustion engine (4) is made of a material which behaves as a black body and which at the same time is a good thermal conductor, such as for example a thermal conducting metal such as aluminium and soaked in a selective paint which absorbs the solar radiation (5') and converts it into thermal energy.

4

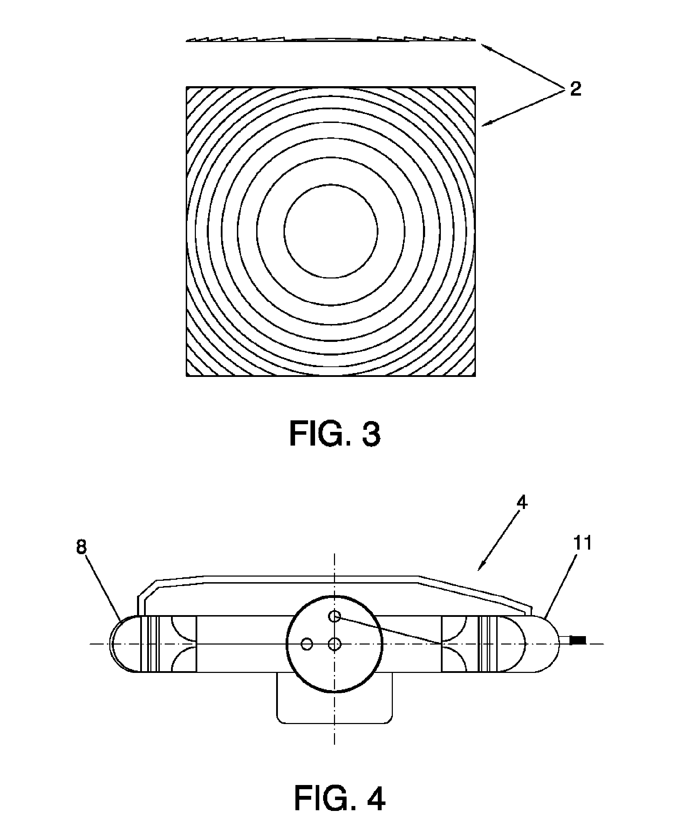

In figure 4, the external combustion Stirling engine used in the system of the invention is shown, which has a Boxer configuration, which has as its main advantage that the distance between the hot spot (8) and the cold spot (11) of the engine is larger, which facilitates the evacuation of the heat at the cold spot (11).

The system also comprises a control system which controls the start up of the engine when the conditions thus require it and which is capable of absorbing the energy of the axle without stopping the engine.

The following example serves to illustrate the invention and must not be considered as limiting the scope thereof. Therein, a thermodynamic study on the theoretical behaviour of the Stirling engine in the operative conditions of the system of the invention is presented.

The Stirling engine is **characterized in that** it is a Standard air cycle. Therefore, the equations which describe the operation thereof are those of the air which is described below:

$$\frac{T_{2S}}{T_1} = (\frac{P_2}{P_1})^{\frac{\gamma-1}{\gamma}} \qquad \text{Equation (1)},$$

Isentropic gas compression.

Where T is the temperature at the different points of the cycle; the numbers indicate the point and the subscript S indicates that it is referring to the isentropic point of the cycle, P is the pressure at the different points of the cycle and $\gamma$ is the polytropic coefficient (specific heat at constant pressure divided by the specific heat at a constant volume) of the cycle.

$$\frac{T_3}{T_{4S}} = (\frac{P_3}{P_4})^{\frac{\gamma-1}{\gamma}} \qquad \text{Equation (2)},$$

Isentropic gas expansion.

$$\eta_C = \frac{T_{2S} - T_1}{T_2 - T_1} \qquad \text{Equation (3)},$$

compression performance.

$$\eta_E = \frac{T_3 - T_4}{T_{3S} - T_4} \qquad \text{Equation (4)},$$

expansion performance.

$$\eta = \frac{(T_3 - T_4) - (T_2 - T_1)}{T_3 - T_2} \qquad \text{Equation (5)},$$

thermodynamic performance of the cycle.

$\eta$ is the parameter which indicates the thermodynamic performance of the cycle.

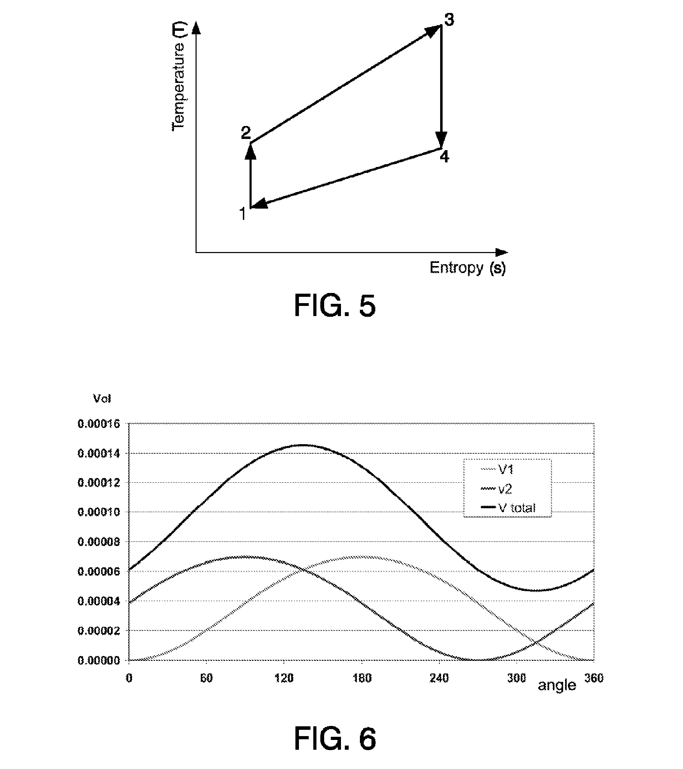

Reference to the previously described points is given in figure 5.

In real processes, the gas entropy increases, therefore, the point 2s will be further to the right than point 2, on the same isobaric curve. Therefore, the point 4s will also have more entropy than point 4 and will be further to the right.

A macroscopic estimation of the operation of the *Stirling* engine can be obtained from these equations in this application of the system of the invention.

Initial data considered for this study are as follows:

Displaced volume, V=30 cubic centimetres.

A temperature of the hot spot of 250°C is assumed, T3=250°C.

A compression performance of 95% and an expansion performance of 95% are considered. These data might seem high even though it is compensated by another beneficial effect. The second effect is isothermal compression and isothermal expansion. Given the characteristics of the machine used, the gas temperature at the cold spot increases due to the compression process, the heat generated is evacuated to the walls of the engine and the desired effect is achieved. Something similar happens during the expansion. This process makes the gas temperature decrease and for this reason the transfer of heat from the cylinder head to the gas increases, achieving isothermal expansion.

On the other hand, the motor is intended to be pressurized, so that the air mass flow increases for the same cubic capacity of a cylinder. Preliminary conditions of 3 ba are assumed. P1=3 ba.

The gas temperature at the end of the compression in these conditions will be 140°C and the temperature at the end of the expansion will be 109°C.

The thermodynamic performance of the cycle is 16.6%.

Finally, supposing that the engine reaches 5,000 rpm, it would give an output of 170 W. This would result in thermal output requirements of 1,000 W. According to studies on solar radiation, around 1,000 W/m$^2$ of thermal solar power arrive at the surface of the Earth. With these results, it can be stated that with an engine such as the one described above and a *Fresnel* lens of 1 m$^2$ which concentrates the radiation in the greenhouse effect collector, around 170 W of mechanical energy and, consequently, electrical energy, can be obtained.

The basic idea is that 170 W of electrical power can be obtained for each square metre of surface of the Fresnel lens.

Below, the results of the study of a prototype Stirling engine in boxer configuration are presented, in drag conditions. For the simulation of this prototype, the following characteristics have been summarized:

Length of the piston rods: 89.9 mm
Length of the crank: 19.9 mm (distance from the axle of the crankshaft to the piston rod)
Stroke: 38.8 mm
Diameter: 49 mm
Dead volume of the tube: 1.13 e-5 m$^3$.
Total dead volume: 2.26 e-5 m$^3$.

The mode of operation of a *Stirling* engine consists of changing the volume of the entire machine, so that at maximum pressure the majority of the gas is contained in the cylinder of the hot spot and when the volume is minimal the gas is mainly contained in the cold spot. This has been achieved in the prototype with two cylinders which have their TDC (top dead centre) offset by 90° from the crankshaft. Given that the engine encloses the gases in this closed cycle, the equations which guide these processes are listed below:

$$\frac{T_i}{T_1} = (\frac{V_1}{V_i})^{\gamma-1} \qquad \text{Equation (6).}$$

Compression process in an adiabatic cylinder.

Where Ti is the temperature of point i referring to the conditions of point 1 (or point of greatest volume) and Vi is the volume at said point. The pressure is calculated from the equation of the perfect gas known volume, enclosed mass and temperature obtained according to the previous equation.

V1 is considered as the volume of the hot spot and V2 as the volume of the cold spot.

The most relevant results of the theoretical calculation are presented in the following table:

Table 1. Summary table of the drag thermodynamic parameters.

| ANGLE ROTATED | V1 | VT | V2 | T(°K) | P (PA) | T°C |
|---|---|---|---|---|---|---|
| 0 | 0.0000000 | 0.0000612 | 0.0000386 | 423.7 | 1009080 | 150.7 |
| 6 | 0.0000002 | 0.0000651 | 0.0000422 | 413.6 | 926937 | 140.6 |
| 12 | 0.0000009 | 0.0000692 | 0.0000457 | 403.4 | 849788 | 130.4 |
| 18 | 0.0000021 | 0.0000737 | 0.0000490 | 393.5 | 778681 | 120.5 |
| 24 | 0.0000036 | 0.0000784 | 0.0000521 | 383.9 | 714071 | 110.9 |

(continued)

| ANGLE ROTATED | V1 | VT | V2 | T(°K) | P (PA) | T°C |
|---|---|---|---|---|---|---|
| 30 | 0.0000056 | 0.0000833 | 0.0000551 | 374.7 | 655996 | 101.7 |
| 36 | 0.0000080 | 0.0000883 | 0.0000578 | 366.0 | 604223 | 93.0 |
| 42 | 0.0000106 | 0.0000934 | 0.0000602 | 357.8 | 558361 | 84.8 |
| 48 | 0.0000136 | 0.0000986 | 0.0000624 | 350.2 | 517937 | 77.2 |
| 54 | 0.0000168 | 0.0001037 | 0.0000643 | 343.2 | 482455 | 70.2 |
| 60 | 0.0000202 | 0.0001088 | 0.0000659 | 336.7 | 451425 | 63.7 |
| 66 | 0.0000238 | 0.0001137 | 0.0000672 | 330.8 | 424390 | 57.8 |
| 72 | 0.0000275 | 0.0001184 | 0.0000683 | 325.5 | 400930 | 52.5 |
| 78 | 0.0000312 | 0.0001229 | 0.0000690 | 320.7 | 380671 | 47.7 |
| 84 | 0.0000349 | 0.0001270 | 0.0000695 | 316.5 | 363284 | 43.5 |
| 90 | 0.0000386 | 0.0001309 | 0.0000696 | 312.7 | 348483 | 39.7 |
| 96 | 0.0000422 | 0.0001343 | 0.0000695 | 309.5 | 336025 | 36.5 |
| 102 | 0.0000457 | 0.0001373 | 0.0000690 | 306.8 | 325705 | 33.8 |
| 108 | 0.0000490 | 0.0001399 | 0.0000683 | 304.5 | 317351 | 31.5 |
| 114 | 0.0000521 | 0.0001420 | 0.0000672 | 302.7 | 310827 | 29.7 |
| 120 | 0.0000551 | 0.0001436 | 0.0000659 | 301.3 | 306025 | 28.3 |
| 126 | 0.0000578 | 0.0001447 | 0.0000643 | 300.4 | 302866 | 27.4 |
| 132 | 0.0000602 | 0.0001452 | 0.0000624 | 300.0 | 301300 | 27.0 |
| 138 | 0.0000624 | 0.0001452 | 0.0000602 | 300.0 | 301300 | 27.0 |
| 144 | 0.0000643 | 0.0001447 | 0.0000578 | 300.4 | 302866 | 27.4 |
| 150 | 0.0000659 | 0.0001436 | 0.0000551 | 301.3 | 306025 | 28.3 |
| 156 | 0.0000672 | 0.0001420 | 0.0000521 | 302.7 | 310827 | 29.7 |
| 162 | 0.0000683 | 0.0001399 | 0.0000490 | 304.5 | 317351 | 31.5 |
| 168 | 0.0000690 | 0.0001373 | 0.0000457 | 306.8 | 325705 | 33.8 |
| 174 | 0.0000695 | 0.0001343 | 0.0000422 | 309.5 | 336025 | 36.5 |
| 180 | 0.0000696 | 0.0001309 | 0.0000386 | 312.7 | 348483 | 39.7 |
| 186 | 0.0000695 | 0.0001270 | 0.0000349 | 316.5 | 363284 | 43.5 |
| 192 | 0.0000690 | 0.0001229 | 0.0000312 | 320.7 | 380671 | 47.7 |
| 198 | 0.0000683 | 0.0001184 | 0.0000275 | 325.5 | 400930 | 52.5 |
| 204 | 0.0000672 | 0.0001137 | 0.0000238 | 330.8 | 424390 | 57.8 |
| 210 | 0.0000659 | 0.0001088 | 0.0000202 | 336.7 | 451425 | 63.7 |
| 216 | 0.0000643 | 0.0001037 | 0.0000168 | 343.2 | 482454 | 70.2 |
| 222 | 0.0000624 | 0.0000986 | 0.0000136 | 350.2 | 517937 | 77.2 |
| 228 | 0.0000602 | 0.0000934 | 0.0000106 | 357.8 | 558361 | 84.8 |
| 234 | 0.0000578 | 0.0000883 | 0.0000080 | 366.0 | 604223 | 93.0 |
| 240 | 0.0000551 | 0.0000833 | 0.0000056 | 374.7 | 655996 | 101.7 |
| 246 | 0.0000521 | 0.0000784 | 0.0000036 | 383.9 | 714071 | 110.9 |
| 252 | 0.0000490 | 0.0000737 | 0.0000021 | 393.5 | 778681 | 120.5 |

(continued)

| ANGLE ROTATED | V1 | VT | V2 | T(°K) | P (PA) | T°C |
|---|---|---|---|---|---|---|
| 258 | 0.0000457 | 0.0000692 | 0.0000009 | 403.4 | 849788 | 130.4 |
| 264 | 0.0000422 | 0.0000651 | 0.0000002 | 413.6 | 926936 | 140.6 |
| 270 | 0.0000386 | 0.0000612 | 0.0000000 | 423.7 | 1009080 | 150.7 |
| 276 | 0.0000349 | 0.0000578 | 0.0000002 | 433.7 | 1094401 | 160.7 |
| 282 | 0.0000312 | 0.0000548 | 0.0000009 | 443.1 | 1180172 | 170.1 |
| 288 | 0.0000275 | 0.0000522 | 0.0000021 | 451.8 | 1262703 | 178.8 |
| 294 | 0.0000238 | 0.0000501 | 0.0000036 | 459.3 | 1337488 | 186.3 |
| 300 | 0.0000202 | 0.0000485 | 0.0000056 | 465.3 | 1399579 | 192.3 |
| 306 | 0.0000168 | 0.0000474 | 0.0000080 | 469.4 | 1444216 | 196.4 |
| 312 | 0.0000136 | 0.0000469 | 0.0000106 | 471.6 | 1467596 | 198.6 |
| 318 | 0.0000106 | 0.0000469 | 0.0000136 | 471.6 | 1467596 | 198.6 |
| 324 | 0.0000080 | 0.0000474 | 0.0000168 | 469.4 | 1444217 | 196.4 |
| 330 | 0.0000056 | 0.0000485 | 0.0000202 | 465.3 | 1399580 | 192.3 |
| 336 | 0.0000036 | 0.0000501 | 0.0000238 | 459.3 | 1337488 | 186.3 |
| 342 | 0.0000021 | 0.0000522 | 0.0000275 | 451.8 | 1262703 | 178.8 |
| 348 | 0.0000009 | 0.0000548 | 0.0000312 | 443.1 | 1180172 | 170.1 |
| 354 | 0.0000002 | 0.0000578 | 0.0000349 | 433.7 | 1094402 | 160.7 |
| 360 | 0.0000000 | 0.0000612 | 0.0000386 | 423.7 | 1009080 | 150.7 |

The first column shows the reference travel angle. The second column shows the volume of the hot spot. The third shows the volume of the cylinder of the cold spot. The fourth column indicates the adiabatic gas temperature in degrees Kelvin and the sixth shows this temperature in degrees centigrade. The fifth column indicates the drag pressure of the engine in Pascals.

In figure 6, the evolution of the total volume of the machine and the volume of each one of the cylinders is observed. It can be observed that in this case the phase lag existing between the two cylinders is 90° and that the volume being displaced by both is the same. These parameters are variable in the interests of optimizing the operation of the engine.

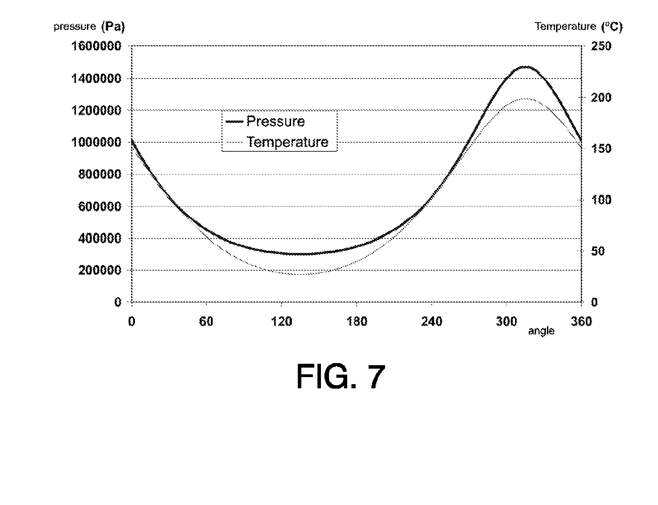

The evolution of the pressure and the temperature in adiabatic conditions are reflected in figure 7. It is observed that around 320° of the thermodynamic process the maximum pressure point appears and the gas is housed in the hot spot from 270°. The heat is provided to the gas at this stage and therefore expansion and mechanical energy are produced.

## Claims

1. System for converting solar energy into mechanical energy or electrical energy (1) which comprises:

   - Means of concentrating (2) the solar radiation (5) originating from the sun (6) at a given focal point (7),
   - Collection means (3) for receiving and accumulating the solar radiation (5') originating from the concentration means (2), for accumulating thermal energy, and
   - Conversion means (4) of the thermal energy accumulated in the collection means (3) into mechanical energy.

2. System for converting energy according to claim 1, **characterized in that** the collection means (3) have an inlet area (9) for solar radiation (5') originating from the concentration means (2), and a contact area (10) for transferring the thermal energy stored therein to the conversion means (4) of thermal energy into mechanical energy.

3. System for converting energy according to claim 2, **characterized in that** the plane of the solar radiation (5') inlet area (9) to the collection means (3) is substantially parallel to the horizontal plane of the concentration means (2).

**4.** System for converting energy according to any of the previous claims, **characterized in that** the collection means (3) are leaktight.

**5.** System for converting energy according to any of the previous claims, **characterized in that** the collection means (3) comprise a greenhouse effect gas in their interior which is transparent to solar radiation (5') and opaque to infrared radiation.

**6.** System for converting energy according to claim 5, **characterized in that** the greenhouse effect gas present inside the collection means (3) is $CO_2$.

**7.** System for converting energy according to any of the previous claims, **characterized in that** the walls of the collection means (3) are provided with thermal insulating material to minimize the leakages of energy in the form of heat.

**8.** System for converting energy according to any of the previous claims, **characterized in that** the area (10) of contact and transfer of thermal energy to the conversion means (4) of thermal energy into mechanical energy is of a material which behaves as a black body, absorbing all of the solar radiations and which at the same time is a good thermal conductor.

**9.** System for converting energy according to claim 8, **characterized in that** the material of the contact area (10) is aluminium soaked in a layer of selective paint with a high solar radiation (5') absorption index.

**10.** System for converting energy according to claim 1, **characterized in that** the concentration means (2) of the solar radiation (5) are a *Fresnel* lens.

**11.** System for converting energy according to claim 1, **characterized in that** the conversion means (4) of the thermal energy accumulated in the collection means (3) into mechanical energy are materialized in an external combustion engine.

**12.** System for converting energy according to claim 11, **characterized in that** the external combustion engine is a Stirling engine.

**13.** System for converting energy according to any of the previous claims, **characterized in that** it further comprises means of converting the mechanical energy originating from the conversion means (4) into electrical energy.

**14.** System for converting energy according to any of the previous claims, **characterized in that** it comprises a control system for operating the system, especially upon starting up the engine (4) at the suitable moment and the positioning of the concentration means (2).

**15.** Method for converting solar energy into mechanical energy which comprises the steps of:

- concentrating the solar radiation (5) at a given focal point (7) by means of concentration means (2),
- accumulating the solar radiation (5') originating from the concentration means (2) in accumulating means (3), and
- applying or delivering the thermal energy accumulated in the accumulating means (3) to conversion means (4) of the thermal energy into mechanical energy.

**16.** Method for converting solar energy according to claim 15, **characterized in that** it comprises the additional step of converting the mechanical energy originating from the conversion means (4) into electrical energy.

**FIG. 1**

**FIG. 2**

FIG. 3

FIG. 4

FIG. 5

FIG. 6

FIG. 7

# INTERNATIONAL SEARCH REPORT

| | International application No. |
|---|---|
| | PCT/ ES 2008/000018 |

**A. CLASSIFICATION OF SUBJECT MATTER**

*F03G 6/06* (2006.01)

According to International Patent Classification (IPC) or to both national classification and IPC

**B. FIELDS SEARCHED**

Minimum documentation searched (classification system followed by classification symbols)

F03G+, F24J+

Documentation searched other than minimum documentation to the extent that such documents are included in the fields searched

Electronic data base consulted during the international search (name of data base and, where practicable, search terms used)

CIBEPAT,EPODOC

**C. DOCUMENTS CONSIDERED TO BE   RELEVANT**

| Category* | Citation of document, with indication, where appropriate, of the relevant passages | Relevant to  claim No. |
|---|---|---|
| X<br>Y | US 2005039791 A1 (JOHNSON et al.) 24.02.2005,<br>paragraph [37]; figure 3. | 1, 2, 8, 11-16<br>4-7 |
| Y | DE 10161085 A1 (FUERTIG BERTHOLD) 18.06.2003,<br>paragraphs [8-13]; figure 1. | 4-7 |
| X | US 6775982 B1 (KITAMURA et al.) 17.08.2004,<br>column 3, lines 44-60; figure 1. | 1-3, 10-16 |
| X | US 4449515 A (NILSSON et al.) 22.05.1984,<br>column 3, lines 3-34; figure 3. | 1, 13-16 |

☐ Further documents are listed in the continuation of Box C.          ☒ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance. | |
| "E" | earlier document but published on or after the international filing date | |
| "L" | document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" | document referring to an oral disclosure use, exhibition, or other means | "Y" document of particular relevance; the claimed invention cannot be considered to involve an inventive step when the document is combined with one or more other documents , such combination being obvious to a person skilled in the art |
| "P" | document published prior to the international filing date but later than the priority date claimed | |
| | | "&" document member of the same patent family |

| Date of the actual completion of the international search | Date of mailing of the international search report |
|---|---|
| 25 April 2008        (25.04.2008) | **(03/06/2008)** |
| Name and mailing address of the ISA/<br>O.E.P.M.<br><br>Paseo de la Castellana, 75 28071 Madrid, España.<br>Facsimile No.   34 91 3495304 | Authorized officer<br>J. Merello Arvilla<br><br>Telephone No. +34 91 349 84 52 |

Form PCT/ISA/210 (second sheet) (April 2007)

## INTERNATIONAL SEARCH REPORT

Information on patent family members

International application No.

PCT/ ES 2008/000018

| Patent document cited in the search report | Publication date | Patent family member(s) | Publication date |
|---|---|---|---|
| US 2005039791 A | 24.02.2005 | US 7281381 B<br>US 2008078435 A | 16.10.2007<br>03.04.2008 |
| DE 10161085 A | 18.06.2003 | NONE | ------------ |
| US 6775982 B | 17.08.2004 | WO 2004099610 A<br>JP 2004332672 A<br>CN 1550731 A | 18.11.2004<br>25.11.2004<br>01.12.2004 |
| US 4449515 A | 22.05.1984 | US 4280482 A<br>WO 8404806 A | 28.07.1981<br>06.12.1984 |

Form PCT/ISA/210 (patent family annex) (April 2007)